Europäisches Patentamt

European Patent Office

Office européen des brevets

(11) Publication number: **0 225 084**
**A2**

# (12) EUROPEAN PATENT APPLICATION

(21) Application number: **86308799.5**

(22) Date of filing: **12.11.86**

(51) Int. Cl.⁴ **H04M 3/00 , H04M 11/00**

(30) Priority: **19.11.85 US 799519**

(43) Date of publication of application:
**10.06.87 Bulletin 87/24**

(84) Designated Contracting States:
**ES FR GB**

(71) Applicant: **International Standard Electric
Corporation
320 Park Avenue
New York New York 10022(US)**

(72) Inventor: **Zeller, David Andrew, Jr.
29 Ironworks Hill
Brookfield, CT 06804(US)**
Inventor: **Middleton, Francisco Arturo
29 Brookwood Drive
Newtown, CT 06470(US)**
Inventor: **Hargrave, Franklin
R6 Black Walnut Road
Newtown, CT 06470(US)**

(74) Representative: **Ruffhead, Philip Geoffrey
ITT-UK Patent Department Maidstone Road
Foots Cray
Sidcup DA14 5HT(GB)**

## (54) Line Access apparatus.

(57) Line access apparatus includes a line coupler that functions as a high voltage isolation device whereby low voltage large scale integration circuitry can be used to provide a multiplexer/demultiplexer that is physically small, inexpensive and reliable. The apparatus comprises a plug (18) adapted to be inserted between the protector block of the main distribution frame and a plurality of high voltage protectors. The plug includes a plurality of pins (20) of which each pin is intended to bridge a respective line pair. With the pins (20) are associated piezo-electric devices (24) each serving as both a high voltage-isolating device and a signal coupler.

Fig.1.

## LINE ACCESS APPARATUS

The present invention relates to line access apparatus and, in particular, to line access apparatus of the kind including a high voltage isolating coupler and low voltage circuitry to interconnect a plurality of subscriber line pairs already in use with a communication network.

The introduction of and continued demand for non-voice communication services is well recognised. As a result, entire non-voice communication networks have been developed to serve both the individual consumer and large users. In general, the provision of such services has entailed one of two approaches. One is the provision of a separate and distinct communication system; the other is the expanded use of existing forms of communication. The provision of separate and distinct communication systems is, of course, expensive as it requires, inter alia, complete new wiring, whereas the use of existing forms of communication, most frequently telephone lines, requires techniques that do not interfere with existing voice services. The line access apparatus described and discussed hereinafter follows the second approach.

Currently, the essential problems encountered when attempting to use existing telephony systems are two-fold. The first problem is mechanical and electrical access and the second problem is the cost and reliability of equipment capable of functioning at the relatively high voltages required of telephone line circuits.

Existing telephony systems are composed of a number of switches, each switch serving a large number of telephone subscribers. These switches are geographically distributed and are generally referred to as "central office switches". Each central office switch has a main distribution frame - (MDF) whereat each subscriber line pair served by that switch enters one side thereof. The subscriber line pairs are then routed through the MDF to the switch mechanism. This configuration is also found in smaller, usually privately owned, switches serving a rather geographically concentrated group of subscribers, such as, for example, a university campus. These smaller switches are generally referred to as private branch exchanges (PBXs). Regardless of the size, most telephone company switches are presently operating at near peak capacity. Because of the near peak capacity it would be impossible to provide each subscriber with a second pair of wires for non-voice communication via the MDF. Even if the capacity were available, the age of the existing wiring militates against such an approach because massive disruption of existing voice communication would most likely occur. However, to make efficient use of existing communication lines, the MDF is clearly a most advantageous location to access a large number of subscriber lines. It is primarily for this reason that alternatives to rewiring an MDF have been developed for accessing existing subscriber lines.

One particular development is shown and described in U.S. Patent Applications Serial Numbers 595,108 and 595,120. In these applications a main distribution frame access device is discussed and described. The MDF access device typically includes a plug-in unit that is inserted at the main distribution frame between the subscriber line termination points and the high voltage protection points. The use of such a device can provide immediate access to the subscriber pairs of wires within the main distribution frame without disturbing or disrupting the internal wiring thereof.

Such an access device is particularly useful in systems wherein additional services are to be provided via the subscriber lines, for example, for providing an auxiliary data switch or providing a remote meter reading system or other telemetry applications. Telemetry systems have been described and discussed in U.S. Patent Applications Serial Numbers 648,542; 667,527 and 667,789. In such systems the main distribution frame access device can be used to provide access to the subscriber lines and connected, via a multiplexing means, to the data processing equipment of a utility company.

The provision of data services by the use of a similar main distribution frame access device is described in U.S. Patent Application Serial Number 705,462. In this particular application a system is provided wherein a full range of data services is supplied to subscribers of, for example, an analog switching system.

The second problem in implementing systems using existing communication means is that telephone subscriber line circuits are designed to sustain comparatively high voltages, such as, for example, -48 volts D.C. commonly used in the talking circuits thereof, as well as a superimposed A.C. ringing signal voltage. This voltage is conventionally provided by the central office battery and ringing generator, and exists intermittently on the subscriber lines when rung in response to a telephone call made thereto. In addition, for obvious reasons, telephone subscriber line circuits are also designed to survive lightning strikes and other high voltage transients.

The fact that such line circuits are subjected to and must sustain relatively high voltages is a detriment to electrically interfacing with the subscriber lines. For example, when multiplexing/demultiplexing is performed at the MDF, high voltage switching devices are required; such devices are generally physically large and cannot be easily accommodated in the limited space available.

Currently, high voltage large scale integrated circuits, in addition to being expensive compared with low voltage large scale integrated circuits, are somewhat limited in both manufacture and reliability. Furthermore, currently available high voltage large scale integrated circuits are, themselves, extremely susceptible to high voltage transient signals and could exhibit catastrophic failure due to transients occurring at, or near, the main distribution frame.

Consequently, in order to take full advantage of the ability to access subscriber line pairs at a main distribution frame, it is highly desirable to isolate high voltage signals while, nevertheless, exchanging information with the subscriber lines.

Accordingly, it is an object of the present invention to provide a line access apparatus for use at a main distribution frame of a communication network.

According to the invention, line access apparatus of the kind referred to is characterised in that the apparatus comprises means for connection to each of a plurality of pairs of wires, each pair of wires being adapted to sustain a comparatively high voltage, the connecting means having, at the output thereof, comparatively low voltage signals, and means for transferring the low voltage signal from the connecting means to a plurality of communication channels.

Embodiments of the invention will now be described by way of example with reference to the accompanying drawings, in which:-

Figure 1 is a perspective view, not drawn to scale, of a line access apparatus according to an embodiment of the present invention,

Figure 2 is a block diagram of the line access apparatus shown in Figure 1,

Figure 3 is a circuit diagram of a portion of the apparatus shown in Figure 2, and

Figure 4 is a schematic of a data rejection filter for use with the apparatus shown in Figure 1.

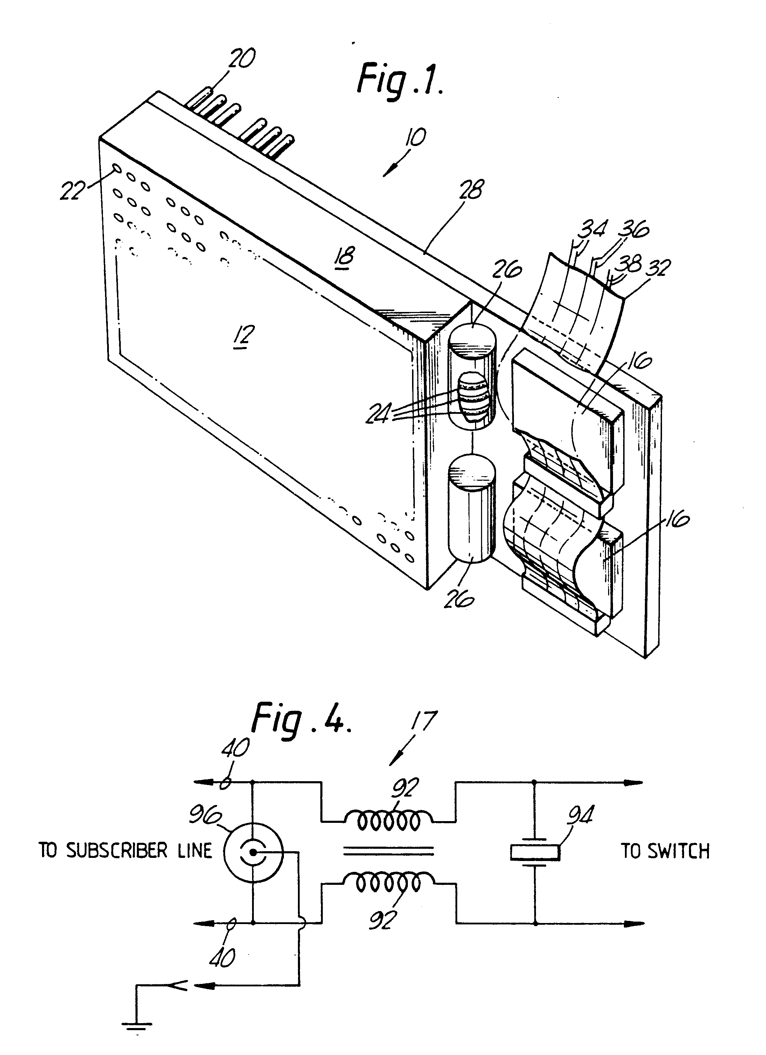

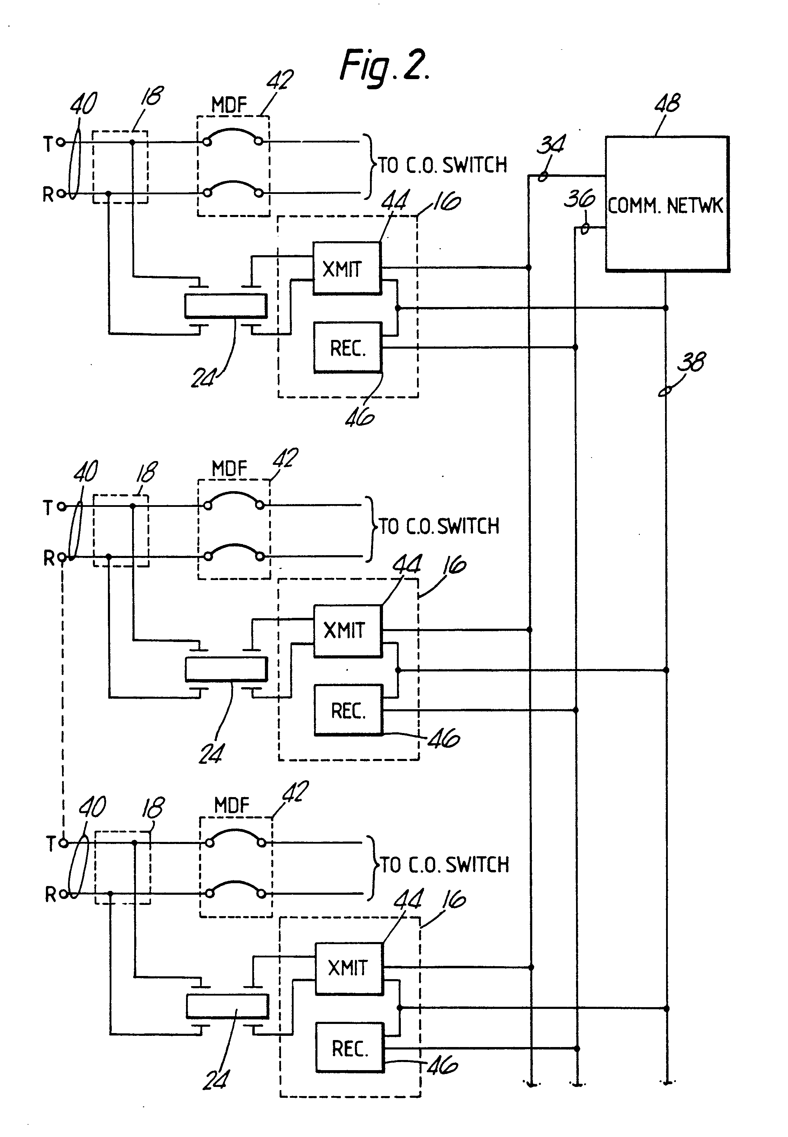

Line access apparatus, generally indicated at 10 in Figure 1 and embodying the principles of the present invention, includes means 12 for accessing a plurality of subscriber lines, means 14 (Figure 2) for coupling to a plurality of subscriber lines via the line access means 12 and means 16 for multiplexing/demultiplexing signals from/to the subscriber lines. Preferably, the apparatus 10 further includes means 17 for rejecting high frequency signals presented at the central office switch.

In this embodiment, the subscriber line access means 12 includes a plug 18 adapted to be inserted between the protector block of the main distribution frame, not shown in Figure 1, and a plurality of high voltage protectors shown in Figure 4. The plug 18 includes a plurality of male pins 20 extending through openings 22 in the plug 18. Each subscriber line pair is bridged by a pair of the pins 20. The pins 20, in addition to being continuous through the plug 18 are also connected to the subscriber line coupling means 14. This connection can be made using known techniques in the connector industry.

Preferably, the subscriber line access means 12 is provided in accordance with the main distribution frame access device shown and described in the above referenced U.S. Patent Applications Serial Numbers 595,108 and 595,120. Essentially, the use of the access means 12 allows the bridging of all of the subscribers line pairs that terminate at, for example, a selected telephone central office switch. Each subscriber line pair can then be selectively accessed via the coupling means 14 at the main distribution frame as desired.

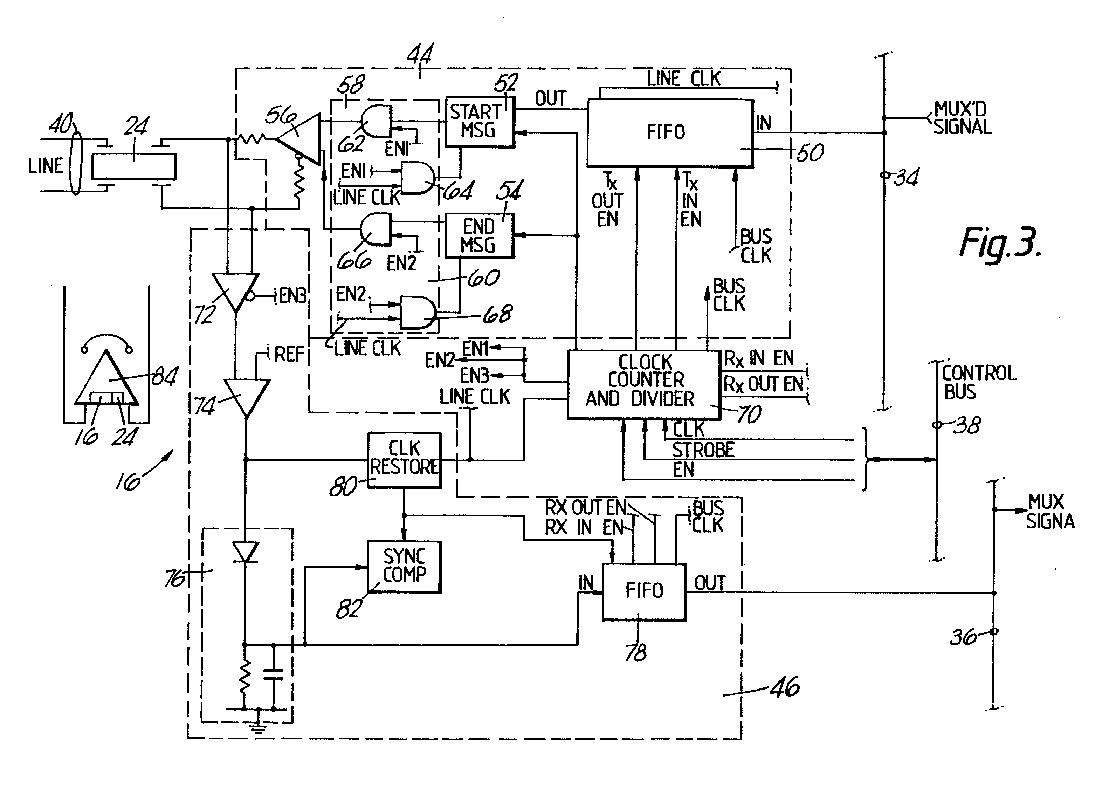

In a preferred embodiment, the means 14 for coupling to the subscriber lines includes a plurality of piezoelectric coupling devices 24. preferably, the devices 24 are stacked and retained by a containment means 26. The means 26 can be formed using known fabrication techniques. Further, the means 26 can be mounted on a base member 28 that can be integrally attached to the plug 18. Preferably, the means 26 is mounted proximate the plug 18 and includes a plurality of pairs of wires 30 extending therefrom. The pairs of wires 30 are, as more fully discussed below and as shown in Figures 2 and 3, connected to the means 16 for multiplexing/demultiplexing signals from/to subscriber lines. In the preferred embodiment, the number of devices 24 in each containment means 26 is at least equal to the number of pairs of pins 20 in the plug 18 associated therewith.

One device 24 particularly adaptable for use in the apparatus 10 is shown and described in U.S. Patent Number 4,529,904.

In general, the device described therein for use in the device 10, provides the means 24 for coupling a low voltage electronic circuit to a subscriber line adapted to sustain a relatively high voltage, such as -48 volts DC. Such a piezoelectric device 24 allows signals to be transferred thereacross only in a relatively narrow bandwidth about the resonant frequency of the piezoelectric disk. Further, such a piezoelectric disk is capable of withstanding high voltages, i.e., 2000 to 4000 volts. Hence, the piezoelectric device 24 is both a high voltage isolating device and a signal coupler. Such a coupling device 14 is inexpensive and physically small. Consequently, a plurality of lines can be coupled in an extremely small space such that, for example, the multiplexing/demultiplexing means 16 can be located at the main distribution frame of a central office switch as well as be fabricated using low voltage circuitry elements.

The means 16 for multiplexing/demultiplexing signals from/to a subscriber line preferably includes a low voltage large scale integrated circuit having the plurality of pairs of wires 30 at one terminus thereof, and a multiplexed bus 32 at another terminus thereof.

In the preferred embodiment, the multiplexed bus 32 is time-division multiplexed (TDM) and includes a transmit bus 34, a receive bus 36 and a control bus 38. As is known, the transmit bus 34 and the receive bus 36 could be combined into a single bus although a more rapid exchange of information is achievable with the separated buses, 34 and 36, if, as more fully discussed below, separate transmit and receive circuitry is provided. The provision of such separate circuitry is within the state of the art of low voltage integrated circuits. Naturally, if physical space becomes a very limiting consideration then a single TDM bus could be used. However, this usually entails a rather more complicated signal control scheme. In fact, the specific implementation of the multiplexed bus 32 is a matter of design choice and other multiplexing/demultiplexing techniques can be used.

In the embodiment shown in Figure 2, the plug 18, although depicted as a plurality of separate elements, has a plurality of subscriber pairs 40, commonly referred to as tip (T) and ring (R) in telephony, connecting into the single plug 18. As shown, the plug 18 is, in this embodiment, on the subscriber side of the main distribution frame 42.

Each piezoelectric coupling device 24 is connected to a subscriber pair 40 on one side thereof and is connected, on the other side, to the means 16 having, for each piezoelectric device 24, both a means 44 for transmitting a signal to the subscriber pair 40 and a means 46 for receiving a signal from the subscriber pair 40. As more fully discussed below, the transmit and receive means, 44 and 46, respectively, communicate with a communication network 48 via the transmit and receive busses, 34 and 36, respectively. Preferably, all needed control signals are provided to the means 16 from the network 48 via the control bus 38.

In this embodiment, the piezoelectric coupling device 24 is designed to have a resonant frequency of about 144 kilohertz. The resonant frequency of such a piezoelectric disk is determined not only by the material of the disk itself but also by the diameter, thickness and position of the electrodes connected thereto. These particulars can be determined and selected by techniques well known in the art. The coupling device 24 thus acts as a band pass filter passing only signals of 144 kilocycles and a surrounding narrow bandwidth. Hence, voice and other signals including D.C. carried on the subscriber pairs 40 do not pass across the device 24 to the means 16 and hence the device 24 serves not only as a coupling device but also as a high voltage isolating device.Apparatus, also useful for digital communication on existing communication media that utilises a similar coupling device can be designed to inject digital in the voice band of the existing communication system. One example of such apparatus is discussed and described in U.S. Patent Application Serial Number 799,521.

In the embodiment shown in Figure 3, the means 44 for transmitting to the subscriber pairs 40 from, for example, the communications network 48, includes a buffer memory 50, means 52 for storing a start message, means 54 for storing an end message, a line driver amplifier 56, means, 58 for enabling the start message and means 60 for enabling the end message. Preferably, each of the enablement means, 58 and 60, includes a pair of logic gates, 62 and 64, and 66 and 68, respectively, having inputs from a control means 70 that provides a clock, counter and clock divider.

The receiver means 46 includes a differential amplifier 72 for amplifying signals from the coupling device 24, and a comparator amplifier 74 that receives the output signals from the differential amplifier 72 and converts them to a digital output against a standardising reference signal. The output from the comparator 74 is directed to amplitude demodulator 76 and clocked into a receive buffer 78 by means of a clock restoration circuit 80 that adjusts the clock of the receive means 46 to that of the received data. Further, the receive means 46 includes means 82 for comparing a synchronisation bit of a received message.

Operationally, information, when appropriately strobed and clocked from the control bus 38 is entered into the buffer memory 50 of the transmit means 44 from the TDM transmission bus 34 whereafter the start message is enabled. The start message is then sent to the subscriber pairs 40 via the line driving amplifier 56. Subsequent to the start message the signals to be transmitted are directly withdrawn from the buffer memory 50 through the logic gate 62 through the line driver 56 and injected onto the subscriber line 40. The start message is synchronised to the line 40 by the line clock pulse from the control bus 38. At the end of the transmitted information the end message is enabled and injected onto the subscriber pair 40 via the line driver 56. During the enablement of any transmission the differential amplifier 72 of the receiving means 46 is disabled.

When no transmission is occurring the receive means 46 is enabled. A signal received from the coupler 24 is detected by the differential amplifier 72 and the output thereof is measured against any convenient reference to regulate the output of the comparator amplifier 74. The output signal therefrom is monitored by a clock restore circuit 80 that adjusts the receive clock to that of the incoming data and provides this clock to a synchronising bit comparator 82. The information is amplitude demodulated and clocked into the receive buffer 78 according the restored clock rate. The information from the receive buffer 78 is then injected into the appropriate time slot on the TDM receive bus 36.

In order to prevent data injected onto the subscriber line 40 from passing through the central office switch onto the voice path of another subscribver line the means 17 is provided. The means 17 is connected between the protector block 96, usually a gas tube or carbon elements, and the MDF 42. Essentially, the means 16 is a filter and, in this embodiment, includes two closely coupled inductors 92 in series with the subscriber line 40 and a resonator 94, for example, a piezoelectric resonator, or an oscillator or the like, in shunt with the central office switch. In one specific embodiment, the inductors 92 are about 1 millihenry each and the resonator 94 has a resonant frequency equal to that of the device 24.

In one specific discrete element implementation the buffer memories, 50 and 78, can be 74F403 first in first out memories manufactured and marketed by Fairchild Semiconductor, Corp. of South Portland, Maine. The means for storing the start and end messages, 52 and 54, can be CD4021B or CD4014B manufactured and marketed by RCA, Corp. of Somerville, New Jersey, the line driver amplifier 56 can be a 4041WB and a line receiver amplifier 72 can be a 74HC623. The synchronising bit comparator 82 can be a CD4063B. The remainder of the elements not specified immediately above are available as off-the-shelf items.

Using known design techniques, the clock counter and divider 70 can be implemented either as a state machine or as a microprocessor device although state machine operation is preferred. Although the above described discrete device implementation is readily available and functional, it is preferred that the means 16 is implemented via a low voltage CMOS large scale integrated circuit. It will be understood that the present apparatus 10 can be implemented with any form of communication network 48.

In one particular arrangement, apparatus 10, in addition to being associated with an MDF access plug 18, is located at each subscriber subset 84 for the extraction of the digitised signals that are then routed to a data device. Advantageously, the particular coupling device 24 and the resultant ability to use low voltage large scale integrated circuitry allows the data extraction at the subscriber premises to be located either within the telephone subset 84 or at any other convenient place.

Another advantage of the apparatus 10 described herein is that it can be made physically small and thus readily used as a multiplexer/demultiplexer at the main distribution frame of a telephone central office, or PBX, without damage to or extended disruption of existing voice services. In addition, it is inexpensive and readily implemented by, for example, the use of low voltage CMOS large scale integrated circuits.

## Claims

1. Line access apparatus of the kind including a high voltage isolating coupler and low voltage circuitry to interconnect a plurality of subscriber line pairs already in use with a communication network, characterised in that the apparatus comprises means (14) for connection to each of a plurality of pairs of wires, each pair of wires being adapted to sustain a comparatively high voltage, the connecting means having, at the output thereof, comparatively low voltage signals, and means for transferring the low voltage signal from the connecting means to a plurality of communication channels.

2. Apparatus as claimed in claim 1, characterised in that the plurality of communicaton channels are time slots on a time-division-multiplexed communication medium (32).

3. Apparatus as claimed in claim 2, characterised in that the time-division-multiplexed communication medium (32) includes a transmit bus (34), a receive bus (36) and a control bus (38).

4. Apparatus as claimed in claim 1, characterised in that the connecting means includes an access plug (18) having a plurality of sets of pins - (20) associated therewith, and a plurality of piezoelectric coupler devices, each piezoelectric coupler device (24) bridging, on one side thereof, one of the sets of pins.

5. Apparatus as claimed in claim 4, characterised in that the plurality of pairs of wires sustain voice communication and each piezoelectric coupling device (24) has a resonant frequency greater than that of the voice communication whereby signals can be injected and received to and from the plurality of pairs of wires simultaneously with the voice communication.

6. Apparatus as claimed in claim 4, characterised in that the low voltage signal transferring means includes means (44), associated with each coupling device (24), for transmitting a low voltage signal across the device, and means (46), associated with each coupling device, for receiving low voltage signals from the pair of wires associated therewith.

7. Apparatus as claimed in claim 6, characterised in that it comprises means for enabling the transmitting means (44) and means for disabling the receiving means (46) when the transmitting means is enabled.

8. Apparatus as claimed in claim 7, characterised in that the transmitting means comprises means (50) for buffering information to be transmitted, the information being received from one of the communication channels.

9. Apparatus as claimed in claim 8, characterised in that it comprises means (52) associated with the transmitting means (44), for storing a start message, the start message being enabled for transmission prior to transmitting information stored in the information buffering means (50).

10. Apparatus as claimed in claim 8, characterised in that it comprises means (54), associated with the transmitting means (44), for storing an end message, the end message being enabled for transmission subsequent to transmitting information stored in the information buffering means (50).

11. Apparatus as claimed in claim 8, characterised in that it comprises means (78), associated with the receiving means (46), for buffering information received from the pair of wires prior to injection thereof into one of the communication channels.

12. Apparatus as claimed in claim 10, characterised in that it comprises means (72), associated with the receiving means (46), for amplifying the low voltage signal prior to storing the information in the received information buffering means (78).

13. Apparatus as claimed in claim 12, characterised in that it comprises means (76), associated with the receiving means (46), for demodulating the amplified signal.

14. Apparatus as claimed in claim 1, characterised in that the low voltage signal transferring means includes low voltage integrated circuitry.

15. Apparatus as claimed in claim 1, characterised in that it comprises means (17) for preventing high frequency signals from passing from one of the pairs of wires to another of the pairs of wires.

16. Apparatus as claimed in claim 15, characterised in that the prevention means includes a pair of coupled inductors (92), each inductor being in series with each one of the pairs of wires, and a resonator (94) shunted across the inductors.

# Fig .1.

# Fig .4.

TO SUBSCRIBER LINE

TO SWITCH

Fig.2.

*Fig.3.*